# EUROPÄISCHE PATENTANMELDUNG

(11) **EP 2 713 497 A1**
(43) Veröffentlichungstag der Anmeldung: **02.04.2014**
(21) Anmeldenummer: 12186380.7
(22) Anmeldetag: 27.09.2012
(51) Int. Cl.: H02M 7/10, H02M 7/155

(54) **Netzgleichrichter**

(71) Anmelder: Siemens Aktiengesellschaft, 80333 München (DE)
(72) Erfinder: Brünner, Siegfried, 09244 Lichtenau (DE)

(57) **Zusammenfassung**

Die Erfindung betrifft einen Netzgleichrichter, welcher durch Umschaltung wahlweise als Brückengleichrichter oder als symmetrische Verdoppelungsschaltung betreibbar ist, wobei zwei fix an einem Wechselspannungsanschluss (KL1) angeschaltete Gleichrichtelemente (D3, D4) wahlweise als Elemente des Brückengleichrichters oder als Elemente der symmetrischen Verdopplerschaltung wirken, wobei zwei andere Gleichrichtelemente (D1, D2) nur als Elemente des Brückengleichrichters wirken und wobei zwischen einer Verbindung dieser zwei anderen Gleichrichtelementen (D1, D2) und dem anderen Wechselspannungsanschluss (KL2) eine erste Induktivität (L1) angeordnet ist. Dabei ist zwischen einer Verbindung der fix angeschalteten Gleichrichtelemente (D3, D4) und dem einen Wechselspannungsanschluss (KL1) eine zweite Induktivität (L2) angeordnet, welche mit entgegengesetztem Wicklungssinn mit der ersten Induktivität (L1) gekoppelt ist. Auf diese Weise bilden die beiden Induktivitäten (L1, L2) eine asymmetrische breitbandige Gegentaktdrossel, wobei unter Einhaltung erforderlicher Leitungsabstände eine kompakte und platzsparende Bauweise gegeben ist.

## Beschreibung

Die Erfindung betrifft einen Netzgleichrichter, welcher durch Umschaltung wahlweise als Brückengleichrichter oder als symmetrische Verdoppelungsschaltung betreibbar ist, wobei zwei fix an einem Wechselspannungsanschluss angeschaltete Gleichrichtelemente wahlweise als Elemente des Brückengleichrichters oder als Elemente der symmetrischen Verdopplerschaltung wirken, wobei zwei andere Gleichrichtelemente nur als Elemente des Brückengleichrichters wirken und wobei zwischen einer Verbindung dieser zwei anderen Gleichrichtelementen und dem anderen Wechselspannungsanschluss eine erste Induktivität angeordnet ist.

Netzgleichrichter dienen der Umwandlung einer netzseitigen Wechselspannung in eine Gleichspannung. Zumeist bildet der Netzgleichrichter eine Eingangsstufe eines Schaltnetzteils. Dabei wird beispielsweise die im Eingang des Schaltnetzteils anliegende Netzspannung in eine gleichgerichtete Zwischenkreisspannung umgewandelt.

Aus der gleichgerichteten Zwischenkreisspannung erfolgt mittels eines Wandlers die Umwandlung in eine Ausgangsspannung mit einem vorgegebenen Spannungsniveau.

Als Netzgleichrichter kommt meistens ein Brückengleichrichter (Grätz-Schaltung) zum Einsatz. In einer Brückenschaltung sind vier Gleichrichtelemente (z.B. Dioden) angeordnet. Jeweils zwei Gleichrichtelemente sind während einer positiven Halbwelle und während einer negativen Halbwelle der Netzspannung leitend. Resultat dieser Zweiweggleichrichtung ist eine pulsierende Gleichspannung.

Eine andere Gleichrichterschaltung ist die sogenannte Delon-Schaltung oder Verdoppelungsschaltung. Dabei handelt es sich um einen Spannungsverdoppler, bestehend aus jeweils einem Einweggleichrichter für jede Halbwelle. Die positive Halbwelle der Netzspannung lädt über ein erstes Gleichrichtelement einen ersten Kondensator und die negative Halbwelle lädt über ein zweites Gleichrichtelement einen zweiten Kondensator. Unter Vernachlässigung der Spannungsabfälle über den Gleichrichtelementen ist dann an einem unbelasteten Ausgang der Delon-Schaltung der doppelte Spitzenwert der Eingangsspannung abgreifbar.

Es sind Netzgleichrichter bekannt, die sowohl eine Grätz-Schaltung als auch eine Delon-Schaltung aufweisen, wobei je nach Bedarf zwischen diesen Schaltungen umgeschaltet werden kann. Im Grätz-Betrieb ist zur Unterdrückung von leitungsgebundenen Störungen üblicherweise ein eingangsseitiges Filter in Form einer Drossel vorgesehen.

Falls eine höhere Zwischenkreisspannung erforderlich oder die Eingangsspannung geringer ist (z.B. 110 Volt statt 230 Volt), erfolgt eine Umschaltung auf die Delon-Schaltung. In diesem Betriebsmodus ist ein anderes Filter zur Unterdrückung von leitungsgebundenen Störungen notwendig. Um den Schaltungsaufbau einfach zu gestalten, wird für diesen Betriebsmodus üblicherweise kein eigenes Filter angeordnet.

Der Erfindung liegt die Aufgabe zugrunde, für einen Netzgleichrichter der eingangs genannten Art eine Verbesserung gegenüber dem Stand der Technik anzugeben.

Erfindungsgemäß wird diese Aufgabe gelöst durch eine Anordnung gemäß Anspruch 1 und eine Verwendung gemäß Anspruch 5. Abhängige Ansprüche beziehen sich auf Weiterbildungen der Erfindung.

Dabei ist zwischen einer Verbindung der fix angeschalteten Gleichrichtelemente und dem einen Wechselspannungsanschluss eine zweite Induktivität angeordnet, welche mit entgegengesetztem Wicklungssinn mit der ersten Induktivität gekoppelt ist. Auf diese Weise bilden die beiden Induktivitäten eine asymmetrische breitbandige Gegentaktdrossel, wobei unter Einhaltung erforderlicher Leitungsabstände eine kompakte und platzsparende Bauweise gegeben ist. Um im Verdoppelungsbetrieb die Impedanz der Gegentaktdrossel gering zu halten, kann die zweite Induktivität deutlich kleiner sein als die erste Induktivität. Zudem dämpft die Gegentaktdrossel leitungsgebundene Störungen oder Störungen aus dem Netz (Burst, Surge). Durch geeignete Dimensionierung der Induktivitäten ist die Gegentaktdrossel optimal an die beiden Betriebsarten (Brückengleichrichterbetrieb, Verdoppelungsbetrieb) anpassbar.

In einer konkreten einfachen Ausführungsform ist eine Serienschaltung aus einem ersten und einem zweiten Kondensator parallel an zwei ausgangsseitige Gleichspannungsanschlusse geschaltet. Parallel dazu sind eine Serienschaltung aus einem ersten und einem zweiten Gleichrichtelement und eine Serienschaltung aus einem dritten und einem vierten Gleichrichtelement geschaltet. Diese vier Gleichrichterelemente bilden in einer Betriebsart die Brückengleichrichterschaltung. Dabei ist eine Verbindung zwischen drittem und viertem Gleichrichtelement über die zweite Induktivität an den einen Wechselspannungsanschluss angeschaltet. Zur Umschaltung zwischen den beiden Betriebsarten ist ein Wechselschalter angeordnet, mittels dessen wahlweise eine Verbindung zwischen erstem und zweiten Gleichrichtelement über die erste Induktivität oder eine Verbindung zwischen den beiden Kondensatoren an den anderen Wechselspannungsanschluss anschaltbar ist. Vorteilhafterweise ist vorgesehen, dass die erste Induktivität zumindest doppelt so groß ist wie die zweite Induktivität. Mit diesem Größenverhältnis zeigt die Schaltung in beiden Betriebsarten ein optimales Verhalten.

In einer Weiterbildung der Erfindung ist parallel zur ersten Induktivität ein Überspannungsableiter angeordnet. Dieser Überspannungsableiter wirkt durch die Kopplung der beiden Induktivitäten in beiden Betriebsarten (Trafoprinzip). Im Verdoppelungsbetrieb werden Überspannungen hochtransformiert und vom Überspannungsableiter begrenzt.

Eine einfache Ausprägung sieht vor, dass der Überspannungsableiter als Funkstrecke ausgebildet ist.

Zudem sind bei einem einfachen und günstigen Aufbau der Schaltung die Induktivitäten aus einem Dynamoblech gefertigt.

Bei einer Nutzung des Netzgleichrichters in einem Schaltnetzteil wirken die Induktivitäten bei geeigneter Dimensionierung als Einschaltstrombegrenzung. Es entfällt der Bedarf, einen NTC-Widerstand mit einer entsprechenden Abschaltsteuerung vorzusehen, wodurch die Schaltung insgesamt einfacher und günstiger wird.

Die Erfindung wird nachfolgend in beispielhafter Weise unter Bezugnahme auf die beigefügten Figuren erläutert. Es zeigen in schematischer Darstellung:
- Fig. 1: Netzgleichrichter mit Oberschwingungsdrossel nach dem Stand der Technik
- Fig. 2: Netzgleichrichter mit Gegentaktdrossel

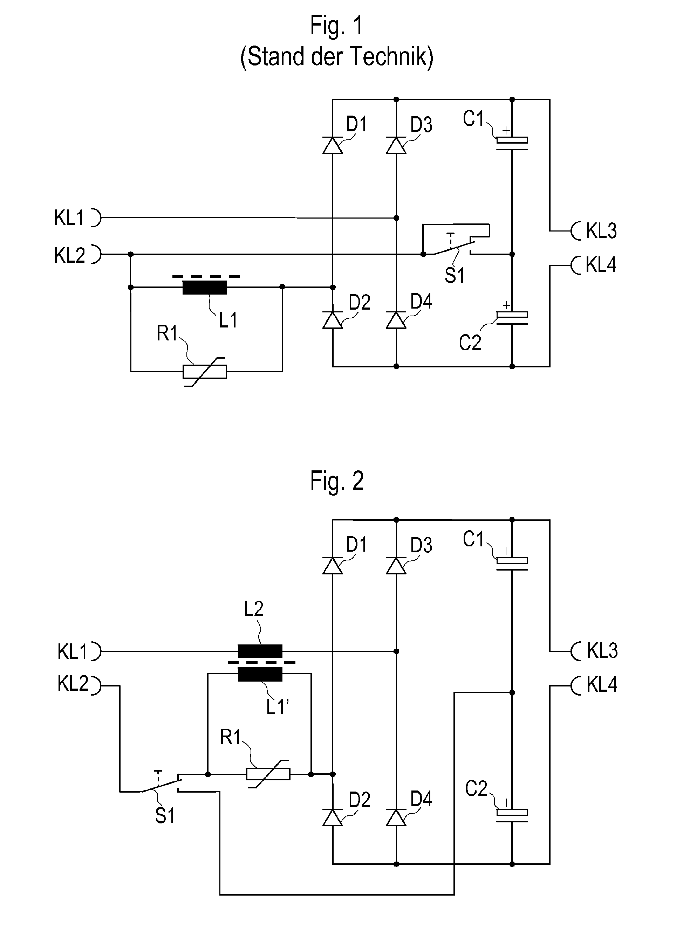

In Fig. 1 ist eine bekannte Kombination einer symmetrischen Verdoppelungsschaltung (Delon-Schaltung) und eines Brückengleichrichters (Grätz-Schaltung) dargestellt. Eingangsseitig weist die Schaltung zwei Wechselspannungsanschlüsse KL1, KL2 auf. Mittels der Schaltung wird eine eingangsseitige Wechselspannung in eine pulsierende Gleichspannung umgewandelt, welche an zwei ausgangsseitigen Gleichspannungsanschlüssen KL3, KL4 anliegt.

Eine beispielhafte Anwendung ist ein Netzgleichrichter mit wahlweiser Umschaltung zwischen 115 und 230 Volt Netzspannung. Beispielsweise arbeiten die Dioden D1, D2, D3, D4 bei einer 230 Volt Netzspannung als Brückengleichrichter. Die beiden Kondensatoren C1, C2 sind in Serie geschaltet und ergeben als Gesamtkapazität den halben Wert der einzelnen Kondensatoren C1, C2. Die Kondensatoren C1, C2 sind daher für die halbe ausgangsseitige Gleichspannung dimensioniert.

Den nur im Brückengleichrichterbetrieb wirkenden Dioden D1, D2 ist eine Induktivität L1 vorgeschaltet. Diese wirkt als Oberschwingungsdrossel. Parallel zu der Induktivität L1 ist ein Überspannungsableiter R1 geschaltet, welcher Überspannungen an der Induktivität L1 verhindert.

Im Verdoppelungsbetrieb (z.B. bei 115 Volt Netzspannung) wird mittels des Schalters S1 ein Pol der Wechselspannung direkt mit der Verbindungsleitung der Kondensatoren C1, C2 verbunden. Die erste Diode D1 und die zweite Diode D2 liegen somit in Sperrrichtung parallel zu den Kondensatoren C1, C2 und sind ohne Funktion. Die dritte Diode D3 und die vierte Diode D4 arbeiten jeweils als Einweggleichrichter. Die dritte Diode D3 richtet eine positive Halbwelle der Netzspannung gleich, die mit dem zweiten Kondensator C2 gesiebt wird. In entsprechender Weise wird eine negative Halbwelle mit der vierten Diode D4 gleichgerichtet und mit dem ersten Kondensator C1 gesiebt. An den beiden Kondensatoren C1, C2 liegt insgesamt der Spitze-Spitze-Wert der eingangsseitigen Wechselspannung an.

Im Verdoppelungsbetrieb ist die als Oberschwingungsdrossel wirkende Induktivität L1 weggeschaltet. Neben der ersten und zweiten Diode D1, D2 verlieren im Verdoppelungsbetrieb somit auch die Induktivität L1 und der Überspannungsableiter R1 ihre Wirkung. Die damit verbundene Störungsanfälligkeit wird zugunsten eines höheren Wirkungsgrads in Kauf genommen.

Mit einer erfindungsgemäßen Schaltung (Fig. 2) werden auch im Verdoppelungsbetrieb Netzstörungen und Überspannungen gedämpft. Zu diesem Zweck ist zwischen dem einen Wechselspannungsanschluss KL1 und den fix angeschlossenen Gleichrichtelementen D3, D4 eine zweite Induktivität L2 angeordnet. Diese zweite Induktivität L2 ist mit entgegengesetztem Wicklungssinn mit der ersten Induktivität L1 gekoppelt und ist deutlich kleiner als die erste Induktivität L1. Auf diese Weise bilden die beiden Induktivitäten eine asymmetrische breitbandige Gegentaktdrossel.

Parallel zur ersten Induktivität L1 ist ein Überspannungsableiter R1 angeordnet. Im Brückengleichrichterbetrieb verhindert der Überspannungsableiter R1, dass an der Gegentaktdrossel Überspannungen auftreten. Wird im Verdoppelerbetrieb die erste Induktivität L1 weggeschaltet, bleibt die Wirkung des Überspannungsableiters R1 weiterhin bestehen. Eine auftretende Überspannung wird über die beiden gekoppelten Induktivitäten L1, L2 auf den Überspannungsableiter R1 übertragen und somit begrenzt.

Der Überspannungsableiter R1 wirkt somit in jeder Betriebsart. Zudem verringert sich im Verdopplerbetrieb die Impedanz zwischen dem Wechselspannungsanschluss KL1 und den angeschlossenen Dioden D3, D4.

## Patentansprüche

1. Netzgleichrichter, welcher durch Umschaltung wahlweise als Brückengleichrichter oder als symmetrische Verdoppelungsschaltung betreibbar ist, wobei zwei fix an einem Wechselspannungsanschluss (KL1) angeschaltete Gleichrichtelemente (D3, D4) wahlweise als Elemente des Brückengleichrichters oder als Elemente der symmetrischen Verdopplerschaltung wirken, wobei zwei andere Gleichrichtelemente (D1, D2) nur als Elemente des Brückengleichrichters wirken und wobei zwischen einer Verbindung dieser zwei anderen Gleichrichtelementen (D1, D2) und dem anderen Wechselspannungsanschluss (KL2) eine erste Induktivität (L1) angeordnet ist, **dadurch gekennzeichnet, dass** zwischen einer Verbindung der fix angeschalteten Gleichrichtelemente (D3, D4) und dem einen Wechselspannungsanschluss (KL1) eine zweite Induktivität (L2) angeordnet ist, welche mit entgegengesetztem Wicklungssinn mit der ersten Induktivität (L1) gekoppelt ist.

2. Netzgleichrichter nach Anspruch 1, **dadurch gekennzeichnet, dass** eine Serienschaltung aus einem ersten Kondensator (C1) und einem zweiten Kondensator (C2) parallel an zwei ausgangsseitige Gleichspannungsanschlusse (KL3, KL4) geschaltet ist, dass parallel dazu eine Serienschaltung aus einem ersten Gleichrichtelement (D1) und einem zweiten Gleichrichtelement (D2) und eine Serienschaltung aus einem dritten Gleichrichtelement (D3) und einem vierten Gleichrichtelement (D4) geschaltet sind, dass des Weiteren eine Verbindung zwischen drittem Gleichrichtelement (D3) und viertem Gleichrichtelement (D4) über die zweite Induktivität (L2) an den einen Wechselspannungsanschluss (KL1) angeschaltet ist und dass mittels eines Wechselschalters (S1) wahlweise eine Verbindung zwischen erstem Gleichrichtelement (D1) und zweiten Gleichrichtelement (D2) über die erste Induktivität (L1) oder eine Verbindung zwischen den beiden Kondensatoren (C1, C2) an den anderen Wechselspannungsanschluss (KL2) anschaltbar ist.

3. Netzgleichrichter nach Anspruch 1 oder 2, **dadurch gekennzeichnet, dass** die erste Induktivität (L1) zumindest doppelt so groß ist wie die zweite Induktivität (L2).

4. Netzgleichrichter nach einem der Ansprüche 1 bis 3, **dadurch gekennzeichnet, dass** parallel zur ersten Induktivität (L1) ein Überspannungsableiter (R1) angeordnet ist.

5. Netzgleichrichter nach Anspruch 4, **dadurch gekennzeichnet, dass** der Überspannungsableiter (R1) als Funkenstrecke ausgebildet ist.

6. Netzgleichrichter nach einem der Ansprüche 1 bis 5, **dadurch gekennzeichnet, dass** die Induktivitäten (L1, L2) aus einem Dynamoblech gefertigt sind.

7. Verwendung eines Netzgleichrichters nach einem der Ansprüche 1 bis 6 als Eingangsgleichrichters eines Schaltnetzteils.
